# EUROPEAN PATENT APPLICATION

(11) **EP 2 732 992 A2**
(43) Date of publication of application: **21.05.2014**
(21) Application number: 13192778.2
(22) Date of filing: 13.11.2013
(51) Int. Cl.: B60H 1/00

(54) **Blower unit for vehicle**

(30) Priority: 15.11.2012 JP 2012251212
(71) Applicant: Valeo Japan Co., Ltd., Saitama 360-0193 (JP)
(72) Inventor: Shichiken, Yutaka, Kumagaya-shi, Saitama 360-0193 (JP)
(74) Representative: Fauré, Marion-Laurie

(57) **Abstract**

The present invention concerns a blower unit for a vehicle (1) comprising a casing (5), which defines an air passage (2), provided with an inside and an outside air introducing port (3,4); a damper (6), which opens or closes the inside or the outside air introducing port (3,4) ; and a blower (7) provided with a motor (71), a motor rotary shaft (71a) and a fan (72) rotatably driven by the motor (71), and the air passage (2) has a fan accommodating portion (23) which is provided on a leeward side of the damper (6), and accommodates the fan (72) of the blower (7). According to the invention, an inner surface of the casing (5) ranging from a portion of the casing near an end of a movable range of the damper (511a), to a portion of the casing near an end of the fan accommodating portion (23) on a windward side is formed in a flat surface or in a convex surface projecting toward the air passage (2).

## Description

### Field of the Invention

The present invention relates to a blower unit which is used in an air-conditioning device for a vehicle or the like, and introduces air into an air passage formed in the inside of a casing through an outside air introducing port and/or an inside air introducing port by operating a blower.

### Background of the Invention

As disclosed in JP-A-9-156345 (patent literature 1) or the like, with respect to a blower unit for a vehicle, for example, there has been already known a blower unit for a vehicle which includes: a casing which has an air passage in the inside thereof and is provided with an inside air introducing port and an outside air introducing port which are communicated with the air passage ; a rotary damper which is arranged in the air passage and opens or closes the inside air introducing port or the outside air introducing port; and a blower which introduces air into the inside of the air passage through the inside air introducing port and/or the outside air introducing port.

Further, as disclosed in patent literature 1, as the noise prevention structure of a blower unit for a vehicle, there has been already known the structure where a closure portion is arranged in the inside of an intake box such that the closure portion is rotatable about a rotary shaft thus constituting a rotary damper which opens or closes the outside air introducing port and the inside air introducing port by an arcuate outer surface of the closure portion, an air flow guide portion which projects toward a rotary shaft side and guides the flow of air toward a suction port of the blower so as to make the flow of air uniform is formed on an inner surface of the closure portion, and a shape of the air flow guide portion is constituted of a plurality of projecting portions which are formed unevenly in a corrugated shape.

### Summary of the Invention

In the structure adopted by the blower unit for a vehicle disclosed in patent literature 1 where the inside air introducing port and the outside air introducing port are opened or closed by rotating the rotary damper, the larger a range of an angle by which the rotary damper rotates, the longer a time necessary for opening or closing the inside air introducing port or the outside air introducing port becomes or the larger a load at the time of performing an operation of changing a rotary damper position also becomes. Accordingly, an angle by which the rotary damper is rotatable (movable angle range) is generally set to less than 180 degrees (approximately 150 degrees, for example). Even with the use of the rotary damper which includes the air flow guide portion on the inner surface of the closure portion as disclosed in patent literature 1 in the blower unit for a vehicle where the movable angle range is set to less than 180 degrees, it is possible to acquire an advantageous effect of making the flow of air toward the suction port of the blower uniform.

However, since the movable angle range of the rotary damper is less than 180 degrees, the advantageous effect of making the flow of air uniform by the air flow guide portion of the rotary damper is limited. The smaller the movable angle range, the larger a casing portion for covering the intake box becomes. In such an enlarged casing portion, an extra space, that is, a space which is displaced from the direction of air which flows into the blower through the outside air introducing port or the inside air introducing port is formed. The extra space generates a vortex formed of air displaced from the direction of air which flows into the blower through the outside air introducing port or the inside air introducing port thus giving rise to a drawback such as noises generated by the blower unit for a vehicle or lowering of blasting efficiency. Accordingly, it is an object of the present invention to provide a blower unit for a vehicle which decrease noises and enhances blasting efficiency by eliminating an extra space in the inside of a casing in which a damper is accommodated thus preventing the generation of a vortex in an air passage ranging from an outside air introducing port or an inside air introducing port to a suction port of the blower.

The blower unit for a vehicle according to the present invention includes: a casing which defines an air passage in the inside thereof, the casing provided with an inside air introducing port and an outside air introducing port which are communicated with the air passage; a damper which is arranged in the air passage and opens or closes the inside air introducing port or the outside air introducing port; and a blower which introduces air into the inside of the air passage through the inside air introducing port and/or the outside air introducing port, wherein the blower has a motor provided with a motor rotary shaft and a fan rotatably driven by the motor, and the air passage has a fan accommodating portion which is provided on a leeward side of the damper and accommodates the fan of the blower therein. The blower unit for a vehicle having such a constitution is characterized in that an inner surface of the casing ranging from a portion of the casing near an end of a movable range of the damper to a portion of the casing near an end of the fan accommodating portion on a windward side is formed in a flat surface or in a convex surface projecting toward the air passage (Claim 1). Here, the number of inside air introducing ports may be one or plural, and the number of dampers may be also one or plural. With respect to a kind of the damper, the damper may be a rotary damper or a damper having a plate-shaped closure portion.

Due to such a constitution, the inner surface of the casing ranging from the portion of the casing near the end of the movable range of the damper to the portion of the casing near the end of the fan accommodating portion on a windward side is formed in a flat surface or in a convex surface projecting toward the air passage. Accordingly, an extra space displaced from the direction of air which flows toward the blower from the outside air introducing port or the inside air introducing port is not formed between a portion of the intake box on a leeward side of the damper and the fan accommodating portion and hence, the generation of a vortex in the air passage can be prevented.

The blower unit for a vehicle according to the present invention includes: a casing which defines an air passage in the inside thereof, the casing provided with an inside air introducing port and an outside air introducing port which are communicated with the air passage; a damper which is arranged in the air passage and opens or closes the inside air introducing port or the outside air introducing port; and a blower which introduces air into the inside of the air passage through the inside air introducing port and/or the outside air introducing port, wherein the blower has a motor provided with a motor rotary shaft and a fan rotatably driven by the motor, and the air passage has a filter accommodating portion which is provided on a leeward side of the damper and accommodates a filter therein, and a fan accommodating portion which is provided on a leeward side of the filter accommodating portion and accommodates the fan of the blower therein. The blower unit for a vehicle having such a constitution is characterized in that an inner surface of the casing ranging from a portion of the casing near an end of a movable range of the damper to an end of the filter accommodating portion on a windward side is formed in a flat surface or in a convex surface projecting toward the air passage (Claim 2). Also in the blower unit for a vehicle of a type which includes the filter accommodating portion, the number of inside air introducing ports may be one or plural, and the number of dampers may be also one or plural. With respect to a kind of the damper, the damper may be a rotary damper or a damper having a plate-shaped closure portion. Due to such a constitution, the inner surface of the casing ranging from the portion of the casing near an end of the movable range of the damper to the end of the filter accommodating portion on a windward side is formed in a flat surface or in a convex surface projecting toward the air passage. Accordingly, an extra space displaced from the direction of air which flows toward the blower from the outside air introducing port or the inside air introducing port is not formed between the portion of the intake box on a leeward side of the damper and the filter accommodating portion and hence, the generation of a vortex in the air passage can be prevented.

In the blower unit for a vehicle according to the present invention, the outside air introducing port may be arranged in the axial direction of the motor rotary shaft (Claim 3).

Due to such a constitution, the outside air introducing port is arranged in the axial direction of the motor rotary shaft and hence, outside air can be sucked into the fan linearly whereby the air flow resistance in an outside air introducing passage can be decreased.

In the blower unit for a vehicle according to the present invention, the damper may be a rotary damper which includes a damper rotary shaft, and a closure portion which is capable of closing the inside air introducing port or the outside air introducing port, and the closure portion may have a convex surface projecting toward the damper rotary shaft (Claim 4).

Due to such a constitution, the closure portion of the damper has the convex surface projecting toward the damper rotary shaft and hence, an extra space displaced from the direction of air which flows into the blower from the inside air introducing port or the outside air introducing port is further decreased whereby the generation of a vortex in the air passage can be prevented more reliably.

In the blower unit for a vehicle according to the present invention of a type not including a filter accommodating portion according to the present invention, the damper may be a rotary damper which includes a damper rotary shaft, and a closure portion which is capable of closing the inside air introducing port or the outside air introducing port, and a portion of the casing which is arranged near an end of a movable range of the rotary damper may have a seat surface which extends toward the inside of the air passage and with which the rotary damper is brought into contact, and an inner surface of the casing ranging from an end of the seat surface inside the air passage to a portion of the inner surface of the casing near an end of the fan accommodating portion on a windward side may be formed in a flat surface or in a convex surface projecting toward the air passage (Claim 5).

Due to such a constitution, the inner surface of the casing ranging from the end of the seat surface inside the air passage to the portion of the inner surface of the casing near the end of the fan accommodating portion on a windward side is formed in a flat surface or in a convex surface projecting toward the air passage. Accordingly, the extra space can be further decreased and hence, the generation of a vortex in the air passage can be prevented more reliably.

In the blower unit for a vehicle according to the present invention of a type including the filter accommodating portion, the damper may be a rotary damper which includes a damper rotary shaft, and a closure portion which is capable of closing the inside air introducing port or the outside air introducing port, and a portion of the casing which is arranged near an end of a movable range of the rotary damper may have a seat surface which extends toward the inside of the air passage and with which the rotary damper is brought into contact, and an inner surface of the casing ranging from an end of the seat surface inside the air passage to an end of the filter accommodating portion on a windward side may be formed in a flat surface or in a convex surface projecting toward the air passage (Claim 6) .

Due to such a constitution, the inner surface of the casing ranging from the end of the seat surface inside the air passage to the end of the filter accommodating portion on a windward side is formed in a flat surface or in a convex surface projecting toward the air passage. Accordingly, the extra space can be further decreased and hence, the generation of a vortex in the air passage can be prevented more reliably.

As described above, according to the invention described in Claim 1, the inner surface of the casing ranging from the portion of the casing near the end of the movable range of the damper to the portion of the casing near the end of the fan accommodating portion on a windward side is formed in a flat surface or in a convex surface projecting toward the air passage. Accordingly, an extra space displaced from the direction of air which flows toward the blower from the outside air introducing port or the inside air introducing port is not formed in the intake box from a leeward side of the damper to the fan accommodating portion and hence, the generation of a vortex in the air passage can be prevented.

According to the invention described in Claim 2, the inner surface of the casing ranging from the portion of the casing near an end of the movable range of the damper to the end of the filter accommodating portion on a windward side is formed in a flat surface or in a convex surface projecting toward the air passage. Accordingly, an extra space displaced from the direction of air which flows toward the blower from the outside air introducing port or the inside air introducing port is not formed between the portion of the intake box on a leeward side of the damper and the filter accommodating portion and hence, the generation of a vortex in the air passage can be prevented.

According to the invention described in Claim 3, the outside air introducing port is arranged in the axial direction of the motor rotary shaft and hence, outside air can be sucked into the fan linearly whereby the air flow resistance in an outside air introducing passage can be decreased.

According to the invention described in Claim 4, the closure portion of the damper has the convex surface projecting toward the damper rotary shaft and hence, an extra space displaced from the direction of air which flows toward the blower from the inside air introducing port or the outside air introducing port can be further decreased whereby the generation of a vortex in the air passage can be prevented more reliably.

According to the invention described in Claim 5, the inner surface of the casing ranging from the end of the seat surface inside the air passage to the portion of the casing near the end of the fan accommodating portion on a windward side is formed in a flat surface or in a convex surface projecting toward the air passage. Accordingly, the extra space displaced from the direction of air which flows toward the blower from the inside air introducing port or the outside air introducing port can be further decreased and hence, the generation of a vortex in the air passage can be prevented more reliably.

According to the invention described in Claim 6, the inner surface of the casing ranging from the end of the seat surface inside the air passage to the end of the filter accommodating portion on a windward side is formed in a flat surface or in a convex surface projecting toward the air passage. Accordingly, the extra space displaced from the direction of air which flows toward the blower from the inside air introducing port or the outside air introducing port can be further decreased and hence, the generation of a vortex in the air passage can be prevented more reliably.

### Brief Description of the Drawings

Fig. 1 is a cross-sectional view of a blower unit for a vehicle according to the present invention of a type including a filter accommodating portion in a state of an outside air introducing mode.
Fig. 2 is a cross-sectional view of the blower unit for a vehicle according to the present invention of a type including a filter accommodating portion in a state of an inside air introducing mode.
Fig. 3A is a perspective view of the blower unit for a vehicle according to the present invention showing the constitution where a seat surface of a rotary damper is formed on a casing, and Fig. 3B is a side view of the blower unit for a vehicle shown in Fig. 3A.
Fig. 4A is an explanatory view showing the flow of air in an outside air introducing mode in the blower unit for a vehicle of a type including a filter accommodating portion shown in

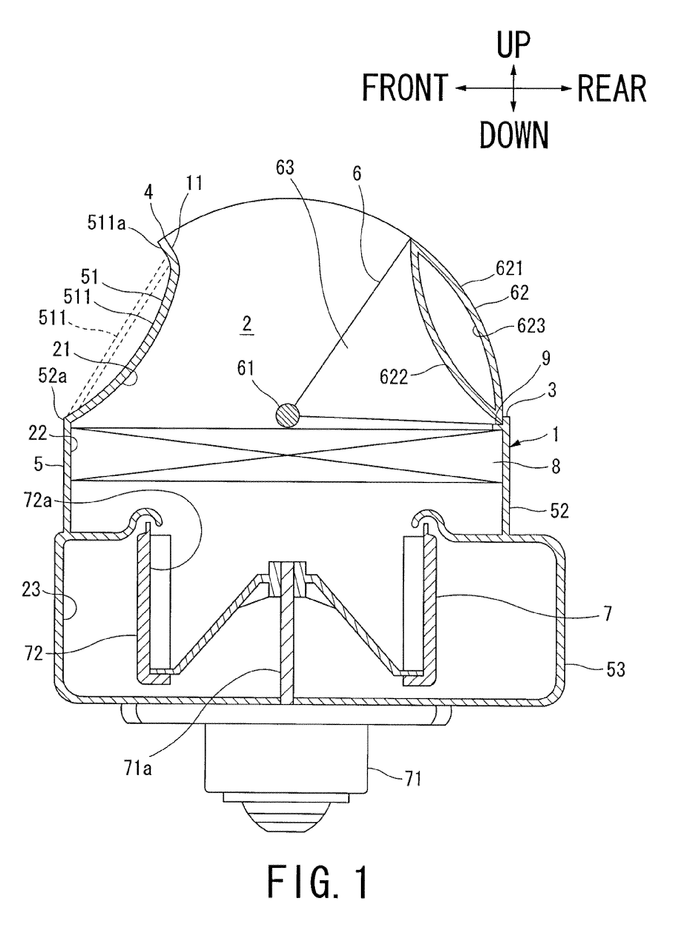

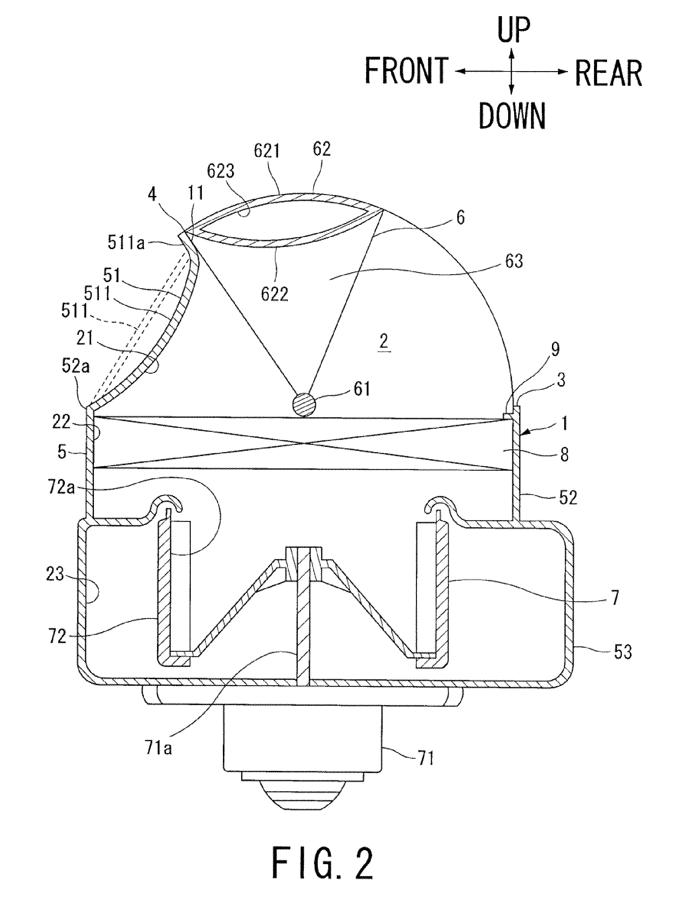

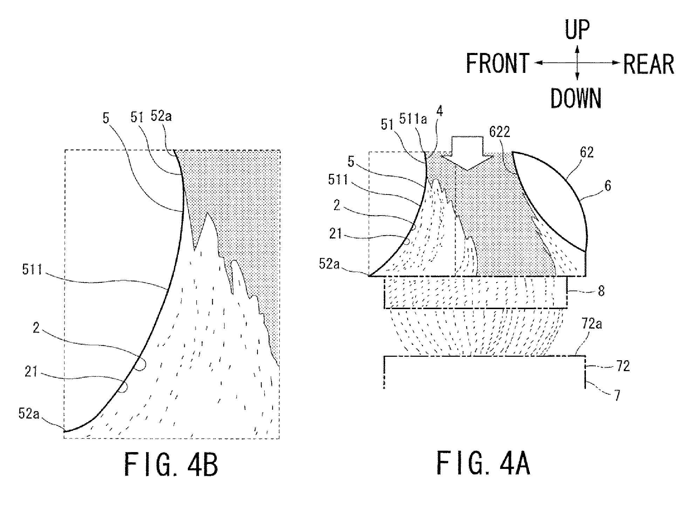

Fig. 1 and Fig. 2 according to the present invention, and more particularly the flow of air near a right side surface or a left side surface of the blower unit in the vehicle lateral direction, and Fig. 4B is an enlarged view of a portion surrounded by a broken line in Fig. 4A.

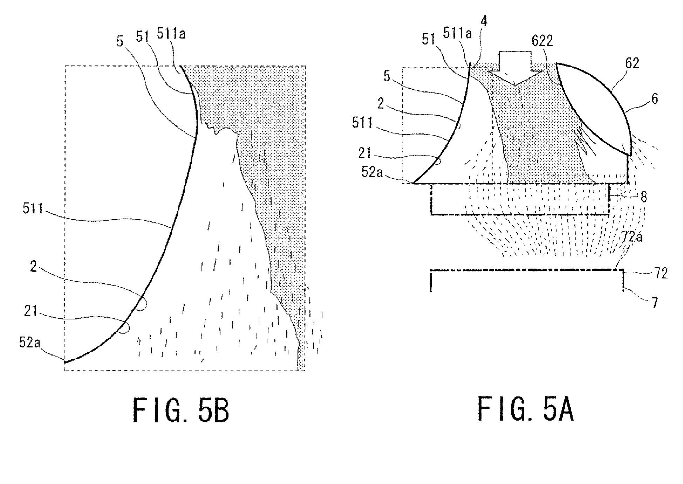

Fig. 5A is an explanatory view showing the flow of air in an outside air introducing mode in the blower unit for a vehicle of a type including a filter accommodating portion shown in
Fig. 1 and Fig. 2 according to the present invention, and more particularly the flow of air near the center of the blower unit in the vehicle lateral direction, and Fig. 5B is an enlarged view of a portion surrounded by a broken line in Fig. 5A.

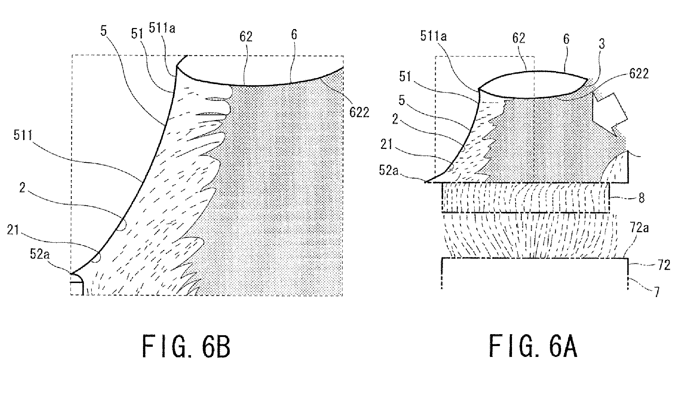

Fig. 6A is an explanatory view showing the flow of air in an inside air introducing mode in the blower unit for a vehicle of a type including a filter accommodating portion shown in
Fig. 1 and Fig. 2 according to the present invention, and more particularly the flow of air near a right side surface or a left side surface of the blower unit in the vehicle lateral direction, and Fig. 6B is an enlarged view of a portion surrounded by a broken line in Fig. 6A.

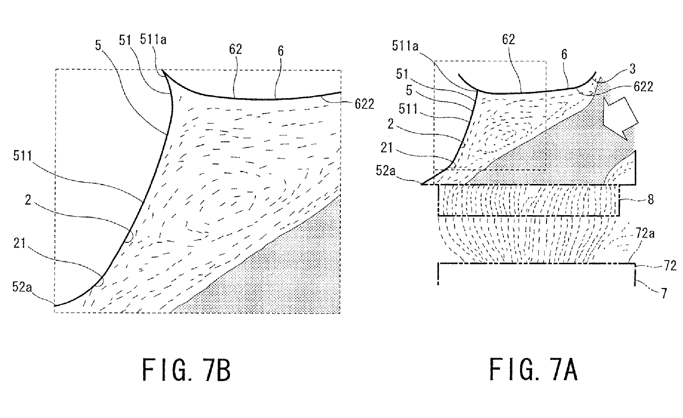

Fig. 7A is an explanatory view showing the flow of air in an inside air introducing mode in the blower unit for a vehicle of a type including a filter accommodating portion shown in Fig. 1 and Fig. 2 according to the present invention, and more particularly the flow of air near the center of the blower unit in the vehicle lateral direction, and Fig. 7B is an enlarged view of a portion surrounded by a broken line in Fig. 7A.

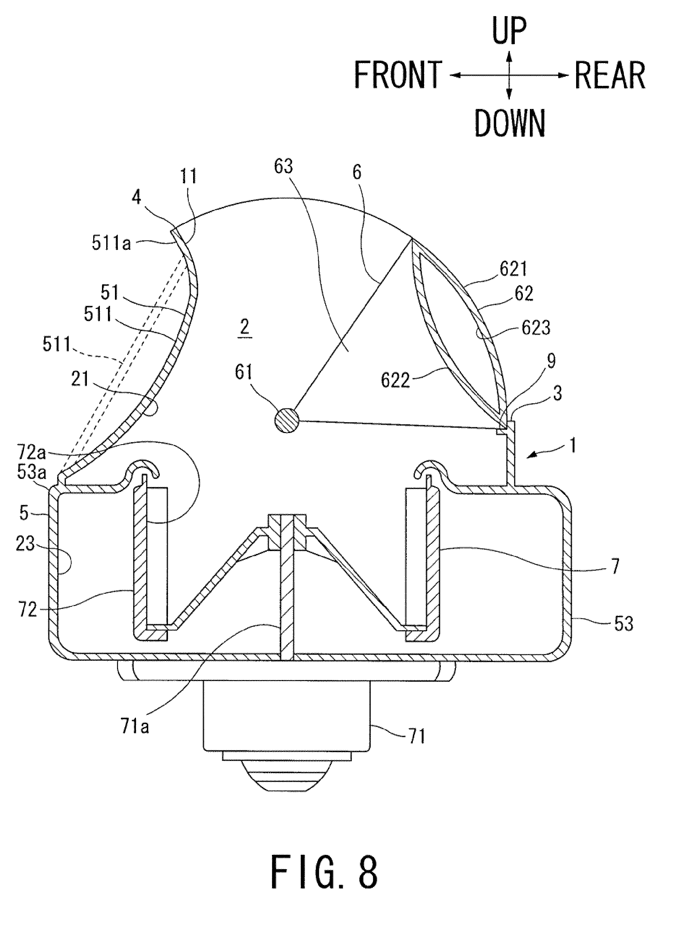

Fig. 8 is a cross-sectional view of a blower unit for a vehicle according to the present invention of a type not provided with a filter accommodating portion in a state of an outside air introducing mode.

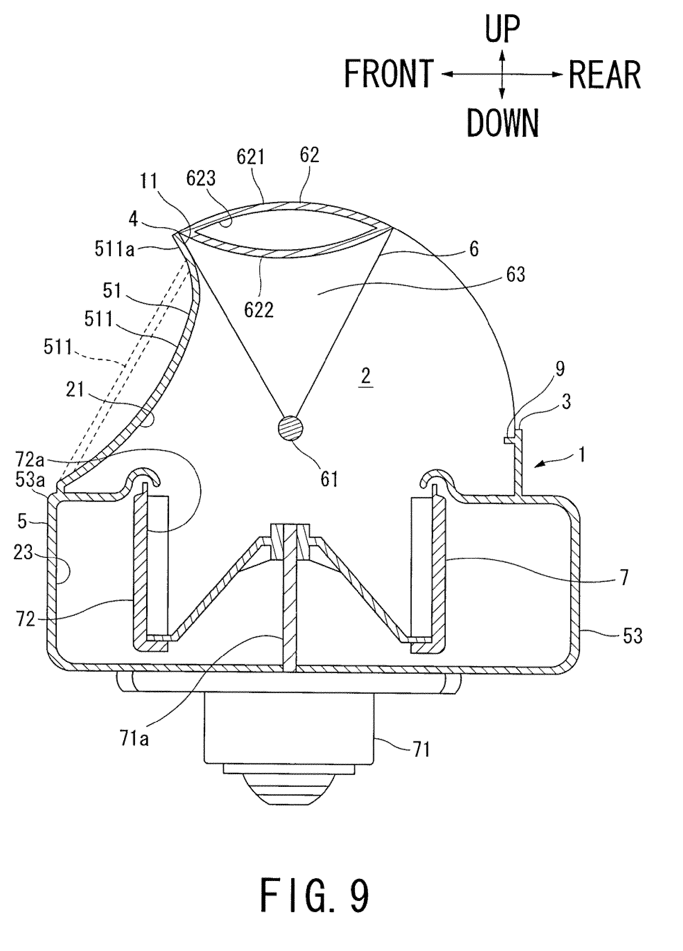

Fig. 9 is a cross-sectional view of the blower unit for a vehicle according to the present invention of a type not including a filter accommodating portion in a state of an inside air introducing mode.

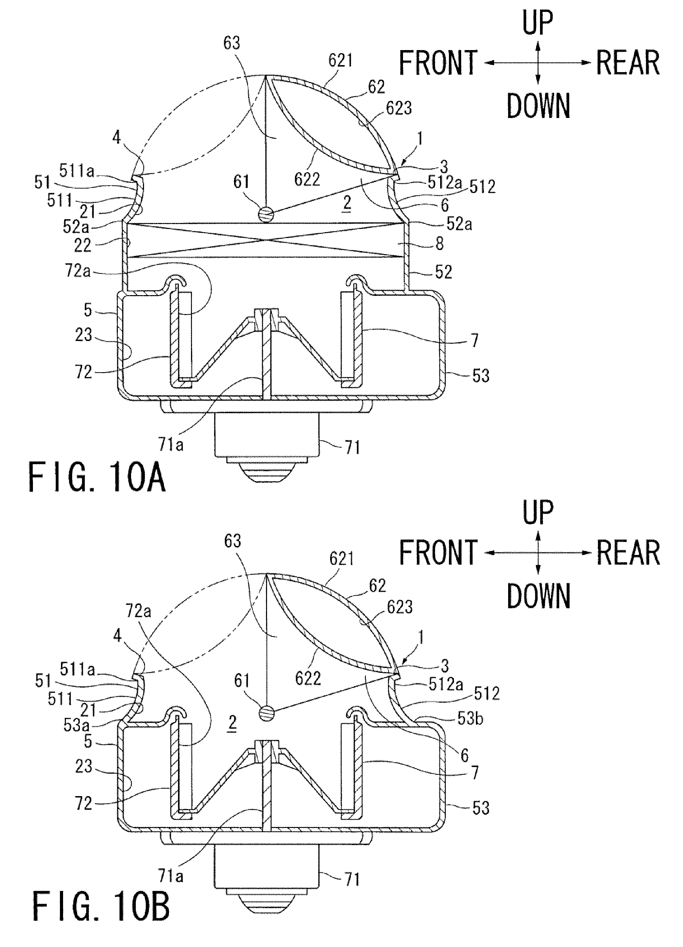

Fig. 10A and Fig. 10B are explanatory views showing blower units for a vehicle according to a third embodiment which are a modification of the blower unit for a vehicle of the first embodiment shown in Fig. 1 and Fig. 2 and a modification of the blower unit for a vehicle according to a second embodiment shown in Fig. 8 and Fig. 9, wherein Fig. 10A is a cross-sectional view of the blower unit for a vehicle of a type including the filter accommodating portion, and Fig. 10B is a cross-sectional view of the blower unit for a vehicle of a type not including a filter accommodating portion.

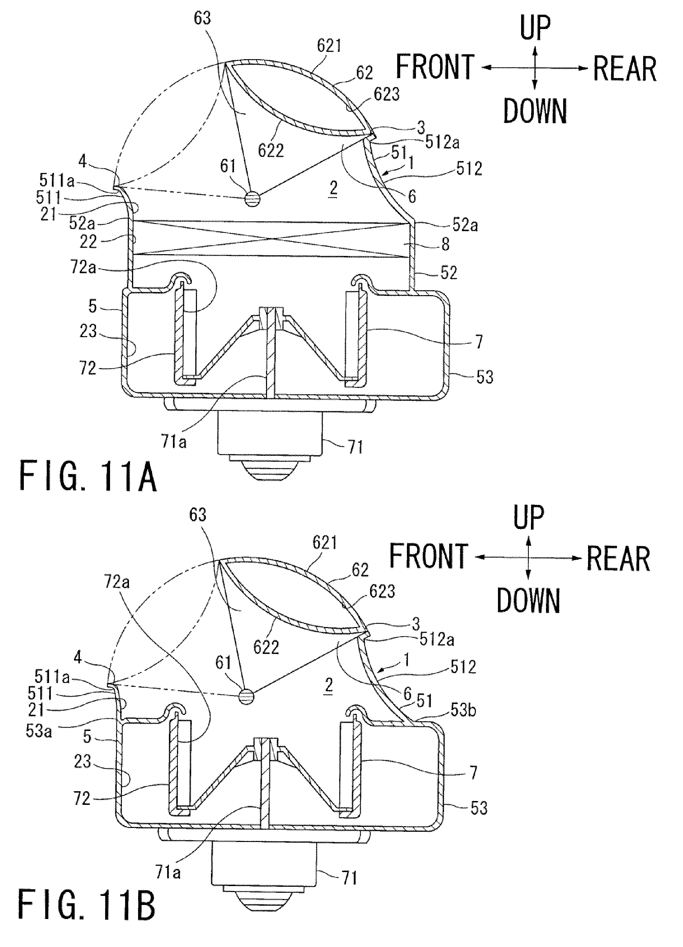

Fig. 11A and Fig. 11B are explanatory views showing examples according to the modifications of the blower units for a vehicle of the third embodiment shown in Fig. 10A and Fig. 10B, wherein
Fig. 11A is a cross-sectional view of the blower unit for a vehicle of a type including a filter accommodating portion, and Fig. 11B is a cross-sectional view of the blower unit for a vehicle of a type not including a filter accommodating portion.

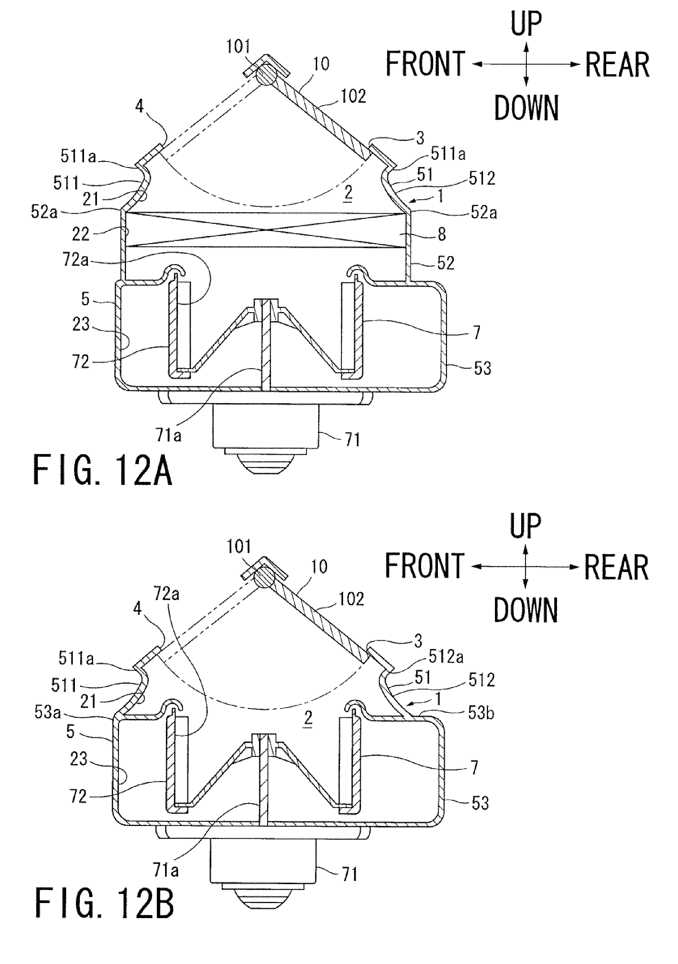

Fig. 12A and Fig. 12B are also explanatory views showing the examples according to the modifications of the blower units for a vehicle of the third embodiment shown in Fig. 10A and
Fig. 10B, wherein Fig. 12A is a cross-sectional view of the blower unit for a vehicle of a type including a filter accommodating portion and a damper having a plate-shaped closure portion, and Fig. 12B is a cross-sectional view of the blower unit for a vehicle of a type not including a filter accommodating portion but provided with a damper having a plate-shaped closure portion.

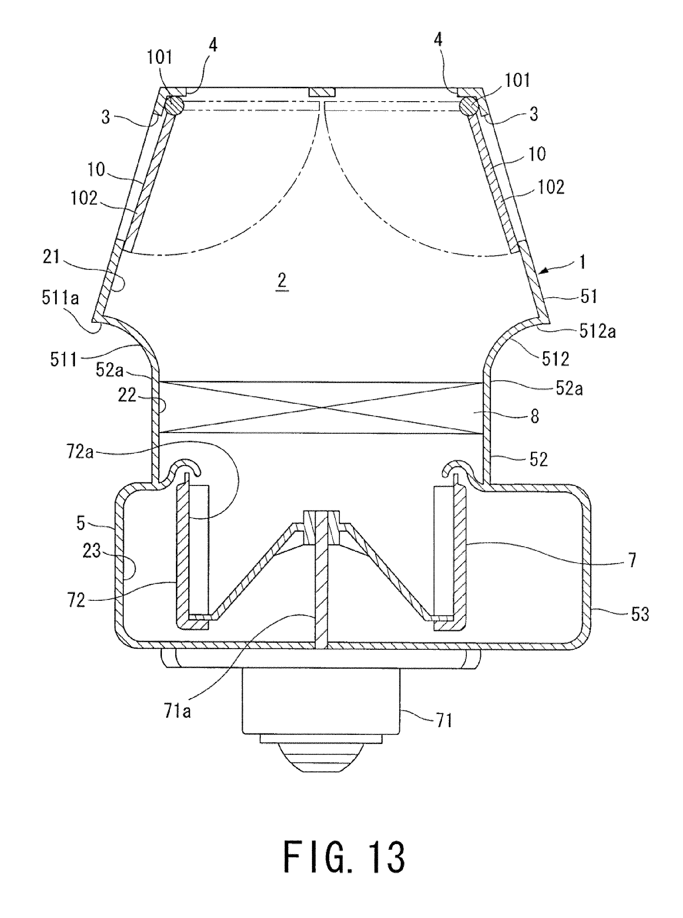

Fig. 13 is a cross-sectional view for explaining the constitution of a blower unit for a vehicle of a fourth embodiment of a type including two outside air introducing ports and two inside air introducing ports thus having two dampers each having a plate-shaped closure portion.

### Detailed Description of Preferred Embodiments

Hereinafter, embodiments according to the present invention are explained in conjunction with attached drawings.

### (First embodiment)

Fig. 1 to Fig. 3 show a blower unit 1 for a vehicle according to a first embodiment which is provided with a filter accommodating portion 22.

The blower unit 1 for a vehicle constitutes a part of an HVAC (Heating Ventilation and Air Conditioning) unit for a vehicle. The blower unit 1 for a vehicle includes: a casing 5 which defines an air passage 2 in the inside thereof, the casing 5 provided with an inside air introducing port 3 and an outside air introducing port 4 which are communicated with the air passage 2; a rotary damper 6 which is arranged in the air passage 2 and opens or closes the inside air introducing port 3 and the outside air introducing port 4; a blower 7 which introduces air into the inside of the air passage 2 through the inside air introducing port 3 and/or the outside air introducing port 4; and a filter 8 which is arranged on a leeward side of the rotary damper 6 and on a windward side of the blower 7.

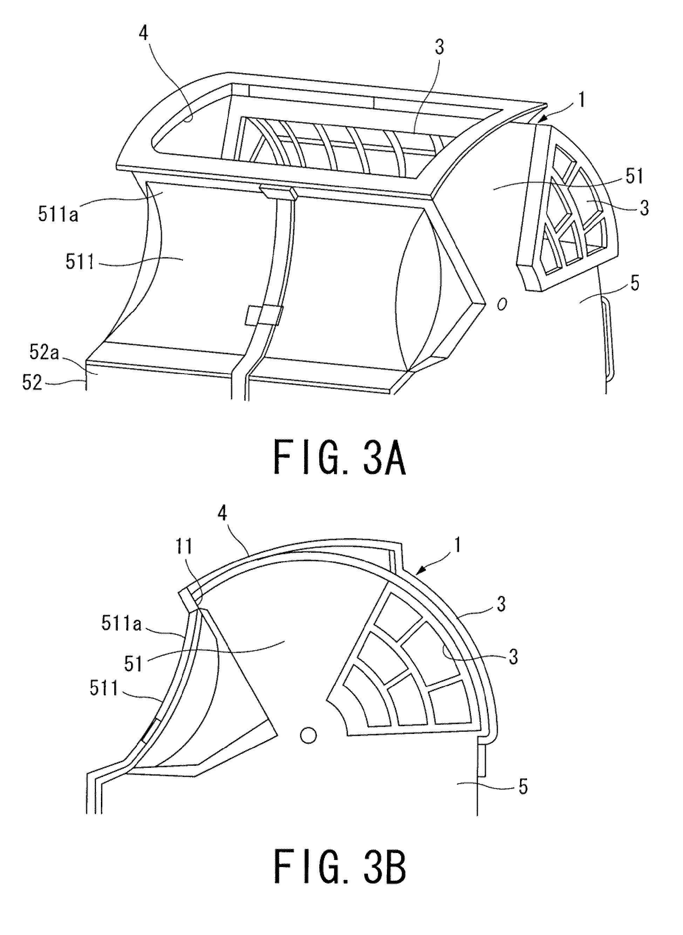

The air passage 2 is a passage in which the inside air introducing port 3 or the outside air introducing port 4 is formed on a windward side, and an air blow-off port which is connected to an air conditioning unit body arranged adjacent to the air passage 2 (neither the air conditioning unit body nor the air blow-off port shown in the drawings) is formed on a leeward side. The air passage 2 includes a damper accommodating portion 21 in which the rotary damper 6 is accommodated, a filter accommodating portion 22 in which the filter 8 is accommodated, and a fan accommodating portion 23 in which a fan 72 (described later) of the blower 7 is accommodated. In the first embodiment, the damper accommodating portion 21, the filter accommodating portion 22 and the fan accommodating portion 23 of the air passage 2 are arranged sequentially along the vertical direction of the vehicle. As shown in Fig. 3, while the outside air introducing port 4 is opened in the casing 5 only upwardly in the vertical direction of the vehicle, the inside air introducing port 3 is opened in the casing 5 not only upwardly in the vertical direction of the vehicle and on a rear side in the longitudinal direction of the vehicle but also on both sides in the lateral direction of the vehicle. By opening the inside air introducing port 3 in the casing 5 in three directions, at the time of introducing inside air into the HVAC unit, the air flow resistance in the HVAC unit can be reduced thus enhancing blasting efficiency.

The rotary damper 6 includes a damper rotary shaft 61, a closure portion 62, and a connecting portion 63 which contiguously connects the damper rotary shaft 61 and the closure portion 62 to each other. The closure portion 62 is movable within a predetermined angle range about the damper rotary shaft 61. The structure of the closure portion 62 is described later.

The blower 7 includes a motor 71 having a motor rotary shaft 71a and a fan 72 which is rotatably driven by the motor 71. The fan 72 includes an intake port 72a which is opened toward a damper accommodating portion 21 side.

The filter 8 is provided for removing foreign matters such as dusts from air which passes through the filter 8 and for removing odors. In the first embodiment, the filter 8 is arranged over the whole region of the filter accommodating portion 22. In the first embodiment, the filter 8 is formed in a flat plate shape having a small wall thickness. The filter 8 is arranged in a horizontally laid-down posture in the longitudinal direction of the vehicle.

The casing 5 includes a portion 51 which forms an outer shell of the damper accommodating portion, a portion 52 which forms an outer shell of the filter accommodating portion, and a portion 53 which forms an outer shell of the fan accommodating portion. The portion 51 which forms the outer shell of the damper accommodating portion is a portion which is also referred to as an intake box. The portion 53 which forms the outer shell of the fan accommodating portion is formed in a scroll shape as viewed in the vertical direction of the vehicle. Although not shown in the drawing, the air blow-off port arranged on a leeward side of the air passage 2 is opened at a distal end of the scroll.

With respect to the portion 51 of the casing which forms the outer shell of the damper accommodating portion, in the first embodiment, as shown in Fig. 1 and Fig. 2, the outside air introducing port 4 is arranged in the axial direction of the motor rotary shaft 71a of the blower 7, and the inside air introducing port 3 is arranged behind the outside air introducing port 4 in the longitudinal direction of the vehicle.

On the portion 51 of the casing which forms the outer shell of the damper accommodating portion, a contact portion 9 which extends toward the inside of the air passage 2 from an opening end of the inside air introducing port 3 on a filter accommodating portion 22 side is formed. The rotary damper 6 is brought into contact with the contact portion 9 when the rotary damper 6 closes the inside air introducing port 3. That is, a position where the rotary damper 6 is brought into contact with the contact portion 9 defines one end of a movable range of the rotary damper 6.

As shown in Fig. 1, Fig. 2 and Fig. 3, the portion 51 of the casing which forms the outer shell of the damper accommodating portion has a wall portion 511 which contiguously connects an end portion of the outside air introducing port 4 and an end portion 52a of the filter accommodating portion 52 on a windward side to each other.

An end portion of the outside air introducing port 4 has, in the vicinity thereof, a portion 511a which is arranged near a front end of the movable range of the rotary damper in the longitudinal direction of the vehicle. In the first embodiment, on the end portion of the outside air introducing port 4, a seat surface 11 which extends toward the inside of the air passage 2 and with which the rotary damper 6 is brought into contact is formed. The seat surface 11 is formed by forming a stepped portion on the portion 51 which forms the outer shell of the damper accommodating portion of the casing. An end of the seat surface 11 inside the air flow passage also functions as the portion 511a which is arranged near the front end of the movable range of the rotary damper in the longitudinal direction of the vehicle. The wall portion 511 is contiguously formed ranging from the end of the seat surface 11 inside the air passage 2 (the portion 511a arranged near the front end of the movable range of the rotary damper in the longitudinal direction of the vehicle) to the end portion 52a of the filter accommodating portion on a windward side.

In Fig. 1 and Fig. 2, the wall portion 511 has a small wall thickness and is bent in an arcuate shape. Accordingly, an inner surface of the wall portion 511 ranging from the end of the seat surface 11 inside the air passage 2 to the end portion 52a of the filter accommodating portion on a windward side is formed in a convex curved surface projecting toward the air passage 2.

In the above-mentioned constitution, it is not always necessary to form the wall portion 511 in a convex surface projecting toward the air passage 2. As indicated by a broken line shown in Fig. 1 and Fig. 2, the wall portion 511 may be formed in a flat surface. Further, although not shown in the drawing, while allowing an outer surface of the wall portion 511 to project toward the outside, an inner surface of the wall portion 511 may be formed in a convex surface projecting toward the air passage 2 or in a flat surface as described above. In the case where the seat surface 11 is not formed on the casing 5, a convex surface projecting toward the air passage 2 or a flat surface may be formed on the inner surface of the wall portion 511 ranging from an arbitrary position on the portion 511a arranged near the front end of the movable range of the rotary damper in the longitudinal direction of the vehicle to the end portion 52a of the filter accommodating portion of the casing on a windward side.

As described above, by forming the inner surface of the wall portion 511 which faces the air passage 2 in a convex surface projecting toward the air passage 2 or in a flat surface, it is possible to prevent an extra space displaced from the direction of air which flows toward the blower 7 from the outside air introducing port 4 or the inside air introducing port 3 from being formed between a leeward side of the rotary damper 6 and the filter accommodating portion 22 in the air passage 2, that is, inside the damper accommodating portion 21 (intake box). Particularly, by forming the wall portion 511 in a convex surface projecting toward the air passage 2, the formation of the extra space can be further prevented. Particularly, by forming the wall portion 511 in a flat surface, an amount of material for forming the casing can be further decreased.

As shown in Fig. 1 and Fig. 2, the closure portion 62 of the rotary damper 6 is constituted of an outer surface portion 621, an inner surface portion 622, and a hollow portion 623 which is surrounded by the outer surface portion 621 and the inner surface portion 622. The inner surface portion 622 of the closure portion has a convex surface projecting toward the damper rotary shaft 61. Due to such a constitution, in the air passage 2, an extra space displaced from the direction of air which flows toward the blower 7 from the outside air introducing port 4 or the inside air introducing port 3 can be further decreased. Further, as shown in Fig. 1, a convex surface projecting toward the damper rotary shaft 61 which the inner surface portion 622 of the closure portion has is formed in symmetry with a convex surface projecting toward the air passage 2 which the wall portion 511 has when the closure portion 62 closes the inside air introducing port 3. Due to such a constitution, in the air passage 2, the flow of air which flows toward the blower 7 from the outside air introducing port 4 can be made more uniform thus preventing the generation of noises.

Next, Fig. 4 to Fig. 7 show characteristic curves indicating the flow of air which flows through the air passage 2 in the blower unit 1 for a vehicle which includes the above-mentioned filter accommodating portion 22 and is configured such that the convex surface projecting toward the air passage 2 is formed on the inner surface of the wall portion 511 and the convex surface projecting toward the damper rotary shaft is formed on the inner surface portion 622 of the rotary damper 6. Fig. 4 shows the flow of air near a right side surface or a left side surface of the blower unit 1 in the lateral direction of the vehicle in the outside air introducing mode, Fig. 5 shows the flow of air near the center of the blower unit 1 in the lateral direction of the vehicle in the outside air introducing mode, Fig. 6 shows the flow of air near the right side surface or the left side surface of the blower unit 1 in the lateral direction of the vehicle in the inside air introducing mode, and Fig. 7 shows the flow of air near the center of the blower unit 1 in the lateral direction of the vehicle in the inside air introducing mode.

According to the characteristic curves shown in Fig. 4 and Fig. 5, near the right side surface or the left side surface of the blower unit 1 in the lateral direction of the vehicle and near the center of the blower unit 1 in the lateral direction of the vehicle, air which is introduced through the outside air introducing port 4 forms the flow which is directed toward the intake port 72a of the blower 7 after passing through the filter 8. In the inside of the damper accommodating portion 21 (intake box), as shown in Fig. 4B and Fig. 5B, the inner side surface of the wall portion 511 is formed in a convex surface projecting toward the air passage 2 and hence, there is no extra space in the damper accommodating portion 21 whereby the generation of a vortex is not recognized thus preventing the generation of noises.

According to the characteristic curve shown in Fig. 6, near the right side surface or the left side surface of the blower unit 1 in the lateral direction of the vehicle, air which is introduced through the inside air introducing port 3 forms the flow which is directed toward the intake port 72a of the blower after passing through the filter 8. As shown in Fig. 6B, in the inside of the damper accommodating portion 21 (intake box), the inner surface of the wall portion 511 is formed in a convex surface projecting toward the air passage 2 and hence, there is no extra space in the damper accommodating portion 21 whereby the generation of a vortex is not recognized thus preventing the generation of noises.

According to the characteristic curve shown in Fig. 7, near the center of the blower unit 1 in the lateral direction of the vehicle, air which is introduced through the inside air introducing port 3 forms the flow which is directed toward the intake port 72a of the blower after passing through the filter 8. As shown in Fig. 7B, even when the inner surface of the wall portion 511 is formed in a convex surface projecting toward the air passage 2, the generation of a vortex is recognized. Here, the inside air introducing port 3 is opened not only in the longitudinal direction of the vehicle but also on both sides in the lateral direction of the vehicle, and the inside air introducing port 3 is also opened up to a portion near the intake port 72a of the fan 72. Accordingly, most of air which flows into the blower through the inside air introducing port 3 pass through an area near the right side surface of the blower unit and an area near the left side surface of the blower unit in the lateral direction of the vehicle where the air flow resistance is small. Accordingly, even when a vortex is generated in an area near the center of the blower unit in the lateral direction of the vehicle, a vortex is not generated in the area near the right side surface of the blower unit and in the area near the left side surface of the blower unit in the lateral direction of the vehicle where an air volume is large and hence, it is possible to substantially prevent the generation of noises.

### (Second embodiment)

Although the explanation has been made with respect to the blower unit 1 for a vehicle shown in Fig. 1 and Fig. 2 heretofore, it is not always necessary to apply the present invention to the blower unit 1 for a vehicle shown in Fig. 1 and Fig. 2. That is, as shown in Fig. 8 and Fig. 9, the present invention is also applicable to a blower unit 1 for a vehicle of a type not including a filter accommodating portion which is exemplified as a second embodiment.

The blower unit 1 for a vehicle shown in Fig. 8 and Fig. 9 differs from the blower unit 1 for a vehicle shown in Fig. 1 and Fig. 2 with respect to a point that the blower unit 1 for a vehicle shown in Fig. 8 and Fig. 9 is not provided with the filter accommodating portion 22, that is, with respect to a point that a wall portion 511 of a casing 5 which is formed in a convex surface projecting toward an air passage 2 is contiguously formed ranging from an end of a seat surface 11 inside an air passage to an end portion 53a of a fan accommodating portion 23 of the casing 5 on a windward side. Other constitutions of the blower unit 1 for a vehicle of the second embodiment are substantially equal to the corresponding constitutions of the blower unit 1 for a vehicle of the first embodiment shown in Fig. 1 and Fig. 2 and hence, the constitutions of the blower unit 1 for a vehicle of the second embodiment substantially equal to the constitutions of the blower unit 1 for a vehicle of the first embodiment shown in Fig. 1 and Fig. 2 are given the same symbols and their repeated explanation is omitted.

Due to such a constitution, also in the blower unit 1 for a vehicle shown in Fig. 8 and Fig. 9, by forming the seat 11 or an inner surface of the wall portion 511 in a convex surface projecting toward the seat surface 11 or in a flat surface, it is possible to prevent an extra space displaced from the direction of air which flows toward a blower 7 from an outside air introducing port 4 or an inside air introducing port 3 from being formed in the air passage 2 between a leeward side of a rotary damper 6 and a fan accommodating portion 23, that is, inside a damper accommodating portion 21 (intake box). Accordingly, in the same manner as the flow of air indicated by the characteristic curves shown in Fig. 4 to Fig. 7, the generation of a vortex in the air passage 2 can be prevented.

### (Third embodiment)

Fig. 10 to Fig. 12 show, out of blower units 1 for a vehicle according to the present invention, blower units 1 for a vehicle of a third embodiment each of which includes a wall portion 511 and a wall portion 512. Hereinafter, the blower unit 1 for a vehicle shown in each drawing is explained. The constitutions of the blower unit 1 of the third embodiment substantially equal to the constitutions of the blower unit 1 for a vehicle shown in Fig. 1 and Fig. 2 or the constitutions of the blower unit 1 for a vehicle shown in Fig. 8 and Fig. 9 are given the same symbols and their repeated explanation is omitted.

In the blower units 1 for a vehicle shown in Fig. 10A and Fig. 10B, an outside air introducing port 4 is arranged in front of a damper rotary shaft 61 in the longitudinal direction of the vehicle, and an inside air introducing port 3 is arranged behind the damper rotary shaft 61 in the longitudinal direction of the vehicle.

In the blower unit 1 for a vehicle of a type including a filter accommodating portion shown in Fig. 10A, a portion 51 which forms an outer shell of a damper accommodating portion of a casing includes: the wall portion 511 which contiguously connects a portion 511a near a front end of a movable range of a rotary damper in the longitudinal direction of the vehicle and an end portion 52a of a filter accommodating portion of the casing on a windward side to each other; and the wall portion 512 which contiguously connects a portion 512a near a rear end of the movable range of the rotary damper in the longitudinal direction of the vehicle and an end portion 52a of a filter accommodating portion of the casing on a windward side to each other. The portion 511a near the front end of the movable range of the rotary damper in the longitudinal direction of the vehicle and the end portion 52a of the filter accommodating portion of the casing on a windward side are positioned along the approximately perpendicular direction in the vertical direction of the vehicle, and the portion 512a near the rear end of the movable range of the rotary damper in the longitudinal direction of the vehicle and the end portion 52a of the filter accommodating portion of the casing on a windward side are positioned along the approximately perpendicular direction in the vertical direction of the vehicle. The wall portions 511, 512 have a small wall thickness and are bent in an arcuate shape and hence, inner surfaces of the wall portions 511, 512 which face an air passage 2 are formed in a convex curved surface projecting toward the air passage 2 respectively. In Fig. 10A, the convex surface projecting toward the air passage 2 which the wall portion 511 has and the convex surface projecting toward the air passage 2 which the wall portion 512 has are arranged in symmetry.

In the blower unit 1 for a vehicle of a type not including the filter accommodating portion shown in Fig. 10B, a portion 51 which forms an outer shell of a damper accommodating portion of a casing includes: a wall portion 511 which contiguously connects a portion 511a near a front end of a movable range of a rotary damper in the longitudinal direction of a vehicle and an end portion 53a of a fan accommodating portion of a casing on a windward side to each other; and a wall portion 512 which contiguously connects a portion 512a near a rear end of the movable range of the rotary damper in the longitudinal direction of the vehicle and an upper surface portion 53b of the fan accommodating portion of the casing to each other. The portion 511a near the front end of the movable range of the rotary damper in the longitudinal direction of the vehicle and the end portion 53a of the fan accommodating portion of the casing 5 on a windward side are positioned along the approximately perpendicular direction in the vertical direction of the vehicle, and the portion 512a near the rear end of the movable range of the rotary damper in the longitudinal direction of the vehicle and the upper surface portion 53b of the fan accommodating portion of the casing are positioned along the approximately perpendicular direction in the vertical direction of the vehicle. The wall portions 511, 512 shown in Fig. 10B also have a small wall thickness and are bent in an arcuate shape and hence, inner surfaces of the wall portions 511, 512 which face an air passage 2 are formed in a convex curved surface projecting toward the air passage 2 respectively. Also in Fig. 10B, the convex surface projecting toward the air passage 2 which the wall portion 511 has and the convex surface projecting toward the air passage 2 which the wall portion 512 has are arranged in symmetry.

Due to such a constitution, also in the blower units 1 for a vehicle shown in Fig. 10A and Fig. 10B, by forming the inner surfaces of the wall portions 511, 512 which face the air passage 2 in a convex surface projecting toward the air passage 2 or in a flat surface, it is possible to prevent an extra space displaced from the direction of air which flows toward a blower 7 from an outside air introducing port 4 or an inside air introducing port 3 from being formed in the air passage 2 between a leeward side of the rotary damper 6 and the fan accommodating portion 23, that is, inside the damper accommodating portion 21 (intake box). Accordingly, in the same manner as the flow of air indicated by the characteristic curves shown in Fig. 4 to Fig. 7, the generation of a vortex in the air passage 2 can be prevented.

In the blower units 1 for a vehicle shown in Fig. 11A and Fig. 11B, an inside air introducing port 3 is arranged from a position above a damper rotary shaft 61 in the vertical direction of the vehicle to a position behind the damper rotary shaft 6 in the longitudinal direction of the vehicle, and an outside air introducing port 4 is arranged in front of the damper rotary shaft 61 in the longitudinal direction of the vehicle. That is, the outside air introducing port 4 and the inside air introducing port 3 of the blower unit 1 for a vehicle shown in Fig. 11A and Fig. 11B are arranged at positions displaced frontward in the longitudinal direction of the vehicle compared to the outside air introducing port 4 and the inside air introducing port 3 of the blower unit 1 for a vehicle shown in Fig. 10A and Fig. 10B as a whole.

Further, the blower unit 1 for a vehicle of a type including a filter accommodating portion shown in Fig. 11A is substantially equal to the blower unit 1 for a vehicle of a type including the filter accommodating portion shown in Fig. 10A with respect to the point that the portion 51 which forms the outer shell of the damper accommodating portion of the casing includes: the wall portion 511 which contiguously connects the portion 511a near the front end of the movable range of the rotary damper in the longitudinal direction of the vehicle and the end portion 52a of the filter accommodating portion of the casing on a windward side to each other; and the wall portion 512 which contiguously connects the portion 512a near the rear end of the movable range of the rotary damper in the longitudinal direction of the vehicle and the end portion 52a of the filter accommodating portion of the casing on a windward side to each other. On the other hand, in the blower unit 1 for a vehicle of a type including the filter accommodating portion shown in Fig. 11A, the portion 511a near the front end of the movable range of the rotary damper in the longitudinal direction of the vehicle and the end portion 52a of the filter accommodating portion of the casing on a windward side are arranged in an obliquely displaced manner from each other in the longitudinal direction of the vehicle, and the portion 512a near the rear end of the movable range of the rotary damper in the longitudinal direction of the vehicle and the end portion 52a of the filter accommodating portion of the casing 5 on a windward side are arranged in an obliquely displaced manner from each other in the longitudinal direction of the vehicle. The wall portions 511, 512 which face an air passage have a small wall thickness and are bent in an arcuate shape and hence, inner surfaces of the wall portions 511, 512 are formed in a convex curved surface projecting toward the air passage 2 respectively.

The blower unit 1 for a vehicle of a type not including a filter accommodating portion shown in Fig. 11B is substantially equal to the blower unit 1 for a vehicle of a type including the filter accommodating portion shown in Fig. 10B with respect to the point that the portion 51 which forms the outer shell of the damper accommodating portion of the casing includes: the wall portion 511 which contiguously connects the portion 511a near the front end of the movable range of the rotary damper in the longitudinal direction of the vehicle and the end portion 53a of the fan accommodating portion of the casing on a windward side to each other; and the wall portion 512 which contiguously connects the portion 512a near the rear end of the movable range of the rotary damper in the longitudinal direction of the vehicle and the upper surface portion 53b of the fan accommodating portion of the casing to each other. On the other hand, in the blower unit 1 for a vehicle of a type not including the filter accommodating portion shown in Fig. 11B, the portion 511a near the front end of the movable range of the rotary damper in the longitudinal direction of the vehicle and the end portion 53a of the fan accommodating portion of the casing on a windward side are arranged in an obliquely displaced manner from each other in the longitudinal direction of the vehicle, and the portion 512a near the rear end of the movable range of the rotary damper in the longitudinal direction of the vehicle and the upper surface portion 53b of the fan accommodating portion of the casing 5 on a windward side are arranged in an obliquely displaced manner from each other in the longitudinal direction of the vehicle. The wall portions 511, 512 shown in Fig. 11B also have a small wall thickness and are bent in an arcuate shape and hence, inner surfaces of the wall portions 511, 512 which face an air passage 2 are formed in a convex curved surface projecting toward the air passage 2 respectively.

Due to such a constitution, also in the blower units 1 for a vehicle shown in Fig. 11A and Fig. 11B, by forming the inner surfaces of the wall portions 511, 512 which face the air passage 2 in a convex surface projecting toward the air passage 2 or in a flat surface, it is possible to prevent an extra space displaced from the direction of air which flows toward a blower 7 from an outside air introducing port 4 or an inside air introducing port 3 from being formed in the air passage 2 between a leeward side of the rotary damper 6 and a fan accommodating portion 23, that is, inside the damper accommodating portion 21 (intake box). Accordingly, in the same manner as the flow of air indicated by the characteristic curves shown in Fig. 4 to Fig. 7, the generation of a vortex in the air passage 2 can be prevented.

The blower unit 1 for a vehicle shown in Fig. 12 includes a damper 10 having a damper rotary shaft 101 and a plate-shaped closure portion 102. The damper rotary shape 101 is arranged between an outside air introducing port 4 and an inside air introducing port 3, and the damper 10 is rotated about the damper rotary shaft 101. Due to such a constitution, the plate-shaped closure portion 102 can open or close the outside air introducing port 4 and the inside air introducing port 3.

The blower unit 1 for a vehicle of a type including a filter accommodating portion shown in Fig. 12A is substantially equal to the blower unit 1 for a vehicle of a type including the filter accommodating portion shown in Fig. 10A with respect to the arrangement of wall portions 511, 512 and a point that inner surfaces of the wall portions 511, 512 are formed in a convex surface projecting toward an air passage 2. The blower unit 1 for a vehicle of a type not including the filter accommodating portion shown in Fig. 12B is substantially equal to the blower unit 1 for a vehicle of a type not including the filter accommodating portion shown in Fig. 10B with respect to the arrangement of the wall portions 511, 512 and a point that inner surfaces of the wall portions 511, 512 are formed in a convex surface projecting toward the air passage 2.

Due to such a constitution, also in the blower unit 1 for a vehicle shown in Fig. 12A and Fig. 12B, by forming the inner surfaces of the wall portions 511, 512 which face the air passage 2 in a convex surface projecting toward the air passage 2 or in a flat surface, it is possible to prevent an extra space displaced from the direction of air which flows toward a blower 7 from the outside air introducing port 4 or the inside air introducing port 3 from being formed in the air passage 2 between a leeward side of the rotary damper 6 and a fan accommodating portion 23, that is, inside a damper accommodating portion 21 (intake box). Accordingly, in the same manner as the flow of air indicated by the characteristic curves shown in Fig. 4 to Fig. 7, the generation of a vortex in the air passage 2 can be prevented.

### (Fourth embodiment)

Fig. 13 shows, out of the blower units 1 for a vehicle according to the present invention, a blower unit 1 for a vehicle of the fourth embodiment which includes two inside air introducing ports 3, 3, two outside air introducing ports 4, 4 and two dampers 10, 10. Each damper 10 includes a damper rotary shaft 101 and a plate-shaped closure portion 102. Each damper rotary shaft 101 is arranged between the inside air introducing port 3 and the outside air introducing port 4. By rotating the dampers 10 about the damper rotary shafts 101, the plate-shaped closure portions 102 can open or close the inside air introducing ports 3 and the outside air introducing ports 4.

Also in such a blower unit 1 for a vehicle which includes two inside air introducing ports 3, 3, two outside air introducing ports 4, 4 and two dampers 10, 10, there are provided a wall portion 511 which contiguously connects a portion 511a near a front end of a movable range of the rotary damper in the longitudinal direction of the vehicle and an end portion of a filter accommodating portion of a casing on a windward side to each other, and a wall portion 512 which contiguously connects a portion 512a near a rear end of the movable range of the rotary damper in the longitudinal direction of the vehicle and an end portion of a filter accommodating portion of the casing on a windward side to each other. The wall portions 511, 512 have a small wall thickness and are bent in an arcuate shape and hence, inner surfaces of the wall portions 511, 512 which face an air passage 2 are formed in a convex surface projecting toward the air passage 2 respectively. In Fig. 13, the convex surface projecting toward the air passage 2 which the wall portion 511 has and the convex curved surface projecting toward the air passage 2 which the wall portion 512 has are arranged in symmetry.

In Fig. 13, the blower unit 1 for a vehicle of a type including the filter accommodating portion is shown. However, a blower unit 1 for a vehicle of a type not including a filter accommodating portion is also substantially equal to the blower unit 1 for a vehicle of a type including a filter accommodating portion with respect to a point that inner surfaces are formed in a convex surface projecting toward an air passage 2 although both blower units 1 differ from each other only with respect to a point that, in the blower unit 1 for a vehicle of a type not including a filter accommodating portion, lower sides of wall portions 511, 512 are contiguously connected to an end portion of a fan accommodating portion of a casing on a windward side and an upper surface portion of a fan accommodating portion of the casing respectively.

Due to such a constitution, also in the blower unit 1 for a vehicle shown in Fig. 13, by forming inner surfaces of the wall portions 511, 512 which face the air passage 2 in a convex surface projecting toward the air passage 2 or in a flat surface, it is possible to prevent an extra space displaced from the direction of air which flows toward a blower 7 from the outside air introducing port 4 or the inside air introducing port 3 from being formed in the air passage 2 between a leeward side of the rotary damper 10 and a fan accommodating portion 23, that is, in the inside of a damper accommodating portion 21 (intake box). Further, in the same manner as the flow of air indicated by the characteristic curves shown in Fig. 4 to Fig. 7, the generation of a vortex in the air passage 2 can be prevented.

### (Other embodiments)

Although the blower unit 1 for a vehicle has been explained heretofore in the form that the blower unit 1 constitutes a part of an HVAC unit for a vehicle, the blower unit for a vehicle according to the present invention is not limited to the blower unit which forms a part of the HVAC unit. For example, the blower unit for a vehicle according to the present invention may be a blower unit which forms a part of a ventilation device for a vehicle which can ventilate a cabin of a vehicle or may be a blower unit which forms a part of a battery cooling device for a vehicle which cools a battery of an electric automobile by supplying air to the battery.

### (Reference Signs List)

1: blower unit for vehicle
2: air passage
21: damper accommodating portion
22: filter accommodating portion
23: fan accommodating portion
3: inside air introducing port
4: outside air introducing port
5: casing
51: portion of casing which forms outer shell of the damper accommodating portion
511: wall portion
511a: portion of casing near end of movable range of rotary damper (portion of casing near end of movable range of damper)
512: wall portion
512a: portion of casing near rear end of movable range of rotary damper (portion of casing near end of movable range of damper)
52: portion which forms outer shell of filter accommodating portion
52a: portion of filter accommodating portion on windward side
53: portion which forms outer shell of fan accommodating portion
53a: portion of casing near end of fan accommodating portion on windward side
53b: surface portion of fan accommodating portion of casing
6: rotary damper (damper)
61: damper rotary shaft
62: closure portion
622: surface portion
7: blower
71: motor
71a: motor rotary shaft
72: fan
72a: intake port
8: filter
10: damper
101: damper rotary shaft
102: closure portion
11: seat surface

## Claims

1. A blower unit for a vehicle (1) comprising:
a casing (5) which defines an air passage (2) in the inside thereof, the casing (5) provided with an inside air introducing port (3) and an outside air introducing port (4) which are communicated with the air passage (2);
a damper (6), (10) which is arranged in the air passage (2) and opens or closes the inside air introducing port (3) or the outside air introducing port (4) ; and
a blower (7) which introduces air into the inside of the air passage (2) through the inside air introducing port (3) and/or the outside air introducing port (4), wherein
the blower (7) has a motor (71) provided with a motor rotary shaft (71a) and a fan (72) rotatably driven by the motor (71), and the air passage (2) has a fan accommodating portion (23) which is provided on a leeward side of the damper (6), (10) and accommodates the fan (72) of the blower (7) therein,
**characterized in that** an inner surface of the casing (5) ranging from a portion of the casing near an end of a movable range of the damper (511a),(512a) to a portion of the casing near an end of the fan accommodating portion (23) on a windward side is formed in a flat surface or in a convex surface projecting toward the air passage (2).

2. A blower unit for a vehicle (1) comprising:
a casing (5) which defines an air passage (2) in the inside thereof, the casing (5) provided with an inside air introducing port (3) and an outside air introducing port (4) which are communicated with the air passage (2);
a damper (6), (10) which is arranged in the air passage (2) and opens or closes the inside air introducing port (3) or the outside air introducing port (4); and
a blower (7) which introduces air into the inside of the air passage (2) through the inside air introducing port (3) and/or the outside air introducing port(4), wherein
the blower (7) has a motor (71) provided with a motor rotary shaft (71a) and a fan (72) rotatably driven by the motor (71), and the air passage (2) has a filter accommodating portion (22) which is provided on a leeward side of the damper (6), (10) and accommodates a filter (8) therein, and a fan accommodating portion (23) which is provided on a leeward side of the filter accommodating portion (22) and accommodates the fan (72) of the blower (7) therein,
**characterized in that** an inner surface of the casing (5) ranging from a portion of the casing near an end of a movable range of the damper (511a), (512a) to an end of the filter accommodating portion (22) on a windward side is formed in a flat surface or in a convex surface projecting toward the air passage (2).

3. The blower unit for a vehicle (1) according to claim 1 or 2, wherein the outside air introducing port (4) is arranged in the axial direction of the motor rotary shaft (71a).

4. The blower unit for a vehicle (1) according to any one of claims 1 to 3, wherein the damper (6) is a rotary damper which includes a damper rotary shaft (61), and a closure portion (62) which is capable of closing the inside air introducing port (3) or the outside air introducing port (4), and the closure portion (62) has a convex surface projecting toward the damper rotary shaft (61).

5. The blower unit for a vehicle (1) according to claim 1, 3 or 4, wherein the damper (6) is a rotary damper which includes a damper rotary shaft (61), and a closure portion (62) which is capable of closing the inside air introducing port (3) or the outside air introducing port (4), and a portion of the casing which is arranged near an end of a movable range of the rotary damper (511a),(512a) has a seat surface which extends toward the inside of the air passage (2) and with which the rotary damper (6) is brought into contact, and an inner surface of the casing (5) ranging from an end of the seat surface inside the air passage (2) to a portion of the inner surface of the casing near an end of the fan accommodating portion (23) on a windward side is formed in a flat surface or in a convex surface projecting toward the air passage (2).

6. The blower unit for a vehicle (1) according to any one of claims 2 to 4, wherein the damper (6) is a rotary damper which includes a damper rotary shaft (61), and a closure portion (62) which is capable of closing the inside air introducing port (3) or the outside air introducing port (4), and a portion of the casing which is arranged near an end of a movable range of the rotary damper (511a),(512a) has a seat surface which extends toward the inside of the air passage (2) and with which the rotary damper (6) is brought into contact, and an inner surface of the casing (5) ranging from an end of the seat surface inside the air passage (2) to an end of the filter accommodating portion (22) on a windward side is formed in a flat surface or in a convex surface projecting toward the air passage (2).
